(19) Europäisches Patentamt

European Patent Office

Office européen des brevets

(11) Veröffentlichungsnummer: **0 518 006 A1**

## (12) EUROPÄISCHE PATENTANMELDUNG

(21) Anmeldenummer: **92104733.8**

(22) Anmeldetag: **19.03.92**

(51) Int. Cl.5: **F16B 13/08**

(30) Priorität: **10.05.91 DE 4115222**

(43) Veröffentlichungstag der Anmeldung:
**16.12.92 Patentblatt 92/51**

(84) Benannte Vertragsstaaten:
**AT BE CH DE DK ES FR GB GR IT LI LU NL PT**

(71) Anmelder: **fischerwerke Artur Fischer GmbH & Co. KG**
**Weinhalde 14 - 18**
**W-7244 Waldachtal 3/Tumlingen(DE)**

(72) Erfinder: **Fischer, Artur, Prof. Dr. h. c.**
**Weinhalde 34**
**W-7244 Waldachtal 3/Tumlingen(DE)**

(54) **Schlagspreizdübel.**

(57) Zur Verankerung von Schlagspreizdübeln in Bohrlöcher mit Hinterschneidung (8) ist es bekannt, einen mehrfach geschlitzten und mit einer Innenbohrung versehenen Spreizanker (1) auf den am Bohrlochgrund aufsitzenden Spreizkörper (2) aufzutreiben. Die Länge des Spreizkörpers (2) entspricht etwa der Länge der Hinterschneidung (8), so daß die Aufspreizung des Spreizankers (1) unmittelbar am Übergang vom zylindrischen Teil des Bohrloches (9) zur Hinterschneidung (8) beginnt.

Zur Reduzierung der Einschlagenergie und zur Vermeidung eines Ausbruchs des Bohrloches (9) im Bereich der Übergangskante weist die Innenbohrung (3) des Spreizankers (1) laut Anmeldung einen vom vorderen Ende ausgehenden Trichter (6) auf, an den sich ein konisch erweiternder erster Abschnitt (7) und ein etwa gleichlanger, sich auf den Durchmesser der Innenbohrung (3) wieder verengender zweiter Abschnitt (13) anschließt. Der Spreizkörper (2) sitzt mit seiner Auflaufschräge (5) in dem Trichter (6) auf und ist über einen in den zylindrischen Teil der Innenbohrung (3) klemmend eingreifenden Zapfen (4) mit dem Spreizanker (1) verbunden.

Fig.1

EP 0 518 006 A1

Die Erfindung betrifft einen Schlagspreizdübel für die Verankerung in konisch nach innen erweiterten Bohrlöchern gemäß der Gattung des Anspruches 1.

Aus der DE 31 17 581 A1 ist ein Schlagspreizdübel bekannt, der aus einem mehrfach geschlitzten Spreizanker mit Innenbohrung und einem Spreizkörper besteht, der über einen in die Innenbohrung eingreifenden Zapfen am vorderen Teil des Spreizankers gehalten ist. Zum Verankern wird der Schlagspreizdübel in ein mit einer Hinterschneidung versehenes Bohrloch eines Betonteiles soweit eingeschoben, bis der Spreizkörper am Bohrlochgrund aufsitzt. Da die Gesamtlänge des Spreizkörpers etwa der Länge der Hinterschneidung des Bohrloches entspricht, befindet sich die vordere Stirnkante des Spreizankers nach seinem Einschieben in das Bohrloch etwa auf der Höhe des Übergangs vom zylindrischen Teil der Bohrung zur Hinterschneidung. Beim Eintreiben des Spreizankers werden die Spreizsegmente durch den Spreizkörper radial nach außen gedrückt, so daß eine starke Reibung und Verklemmung der Spreizsegmente an der Übergangskante vom zylindrischen Teil des Bohrloches zu der Hinterschneidung eintritt. Dies führt zu einer Erhöhung der Einschlagenergie und zu einem Ausbruch des Bohrloches im Bereich dieser Übergangskante. Dadurch wird sowohl der Schlupf des Dübels als auch sein Haltewert ungünstig beeinflußt.

Der Erfindung liegt die Aufgabe zugrunde, einen Schlagspreizdübel zu schaffen, der mit geringer Einschlagenergie verankerbar ist und hohe Haltewerte bei günstigem Schlupfverhalten aufweist.

Die Lösung dieser Aufgabe wird durch die im Kennzeichen des Anspruches 1 angegebenen Merkmale erreicht. Durch den vom vorderen Ende ausgehenden Trichter der Innenbohrung des Spreizankers entsteht ein die Auflaufschräge des Spreizkörpers aufnehmender Abschnitt, der den Überstand des Spreizkörpers über die Stirnseite des Spreizankers vor der Montage verringert. Gleichzeitig bildet der Trichter mit der Auflaufschräge des Spreizkörpers eine Gleitfläche, die das Auftreiben des Spreizankers auf den Spreizkörper begünstigt.

Der Spreizanker wird auf den Spreizkörper soweit aufgetrieben, bis der sich erweiternde erste Abschnitt auf der Abstützfläche des Spreizkörpers aufliegt. Da dieser Abschnitt etwa der halben Länge der Spreizsegmente entspricht, ist für die Verankerung ein Spreizkörper mit verkürzter Abstützfläche verwendbar. Daraus ergibt sich eine weitere Reduzierung des Überstandes, so daß der Spreizanker vor der Verankerung bereits so weit in das Bohrloch einschiebbar ist, daß die Stirnkante des Spreizankers weit in die Hinterschneidung hineinragt. Der beispielsweise durch eine umlaufende Nut gebildete Gelenkpunkt für die Spreizsegmente befindet sich somit zu Beginn der Verankerung sehr nahe an der Übergangskante vom zylindrischen Teil des Bohrloches zur Hinterschneidung, so daß erheblich geringere Reibung und Klemmung an der Übergangskante auftritt. Die Reduzierung der Klemmung wird auch dadurch begünstigt, daß sich die Spreizsegmente durch ihre Querschnittsschwächung aufgrund der beiden aneinanderstoßenden Abschnitte an der Übergangskante durchbiegen können. Durch die Verringerung der Einschlagenergie und Verkürzung des Aufspreizweges kann mit wenigen Hammerschlägen der erfindungsgemäße Spreizanker verankert werden.

Durch den unmittelbar an das Gelenk anschließende und nicht abgestützte Teil der Spreizsegmente ergibt sich eine hohe Flexibilität, die zu einer optimalen Anlage der Spreizsegmente an der Wandung der Hinterschneidung des Bohrloches führt. Da des weiteren die Übergangskante weitgehendst unbeschädigt bleibt, werden hohe Haltewerte bei sehr geringem Schlupf des Schlagspreizdübels erreicht.

Bei einer am Spreizanker angreifenden Zugkraft werden die Spreizsegmente durch die Hinterschneidung des Bohrloches auf die Abstützfläche des Spreizkörpers gepreßt. Dieser mit steigender Zuglast auch ansteigende Preßdruck verhindert ein Abziehen des Spreizankers vom Spreizkörper. Eine weitere Erhöhung des Preßdruckes kann dadurch erreicht werden, daß die Abstützfläche des Spreizkörpers zum vorderen Ende hin leicht verjüngt ausgebildet wird.

In der Zeichnung ist ein Ausführungsbeispiel der Erfindung dargestellt.

Es zeigen:

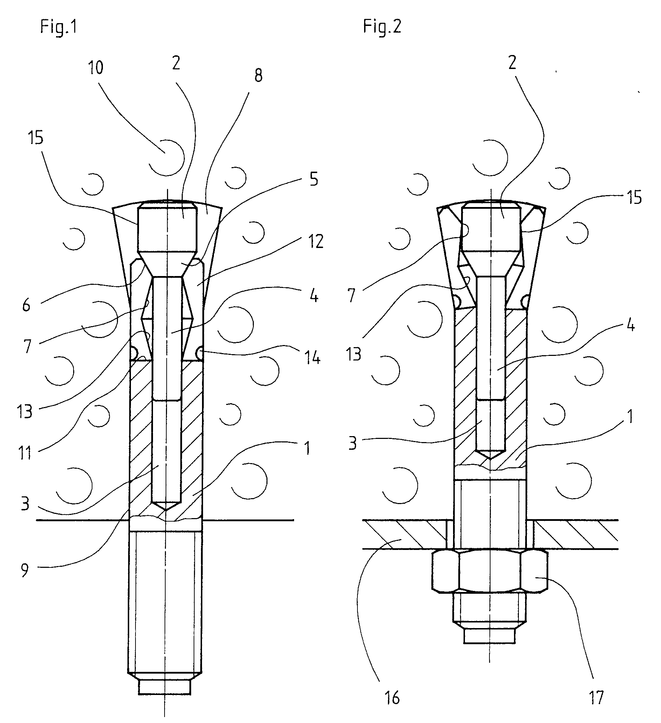

Figur 1    einen im Bohrloch des Mauerwerks eingesetzten Schlagspreizdübel im ungespreizten Zustand und

Figur 2    den Schlagspreizdübel nach Figur 1 in gespreiztem Zustand.

Der Schlagspreizdübel besteht aus dem Spreizanker 1 und dem Spreizkörper 2, der durch den in die Innenbohrung 3 des Spreizankers 1 eingreifenden Zapfen 4 mit dem Spreizanker 1 zu einer Montageeinheit verbunden ist. Der Spreizkörper 2 sitzt mit seiner Auflaufschräge 5 in dem Trichter 6 der Innenbohrung 3 des Spreizankers.

An den Trichter 6 schließt sich ein Abschnitt 7 an, der zur Bildung von Spreizflächen konisch erweitert ist. Der Konuswinkel dieses Abschnittes 7 entspricht etwa dem Winkel der Hinterschneidung 8 des Bohrloches 9 im Mauerwerk 10. Auf halber Länge der durch Schlitze 11 gebildeten Spreizsegmente 12 schließt sich an den Abschnitt 7 ein sich wieder verengender Abschnitt 13 an. Am Übergang von diesem Abschnitt 13 auf die Innenbohrung 3 ist am Außenumfang des Spreizankers 1 eine umlaufende Ringnut 14 angebracht, die durch die Querschnittsverringerung an dieser Stelle das Gelenk für die Spreizsegmente 12 bildet.

Die Länge der Abstützfläche 15 des Spreizkörpers 2 entspricht etwa der Länge des Abschnittes 7 und somit etwa der halben Länge der Spreizsegmente 12. Damit ist der Überstand des Spreizkörpers über die Stirnseite des Spreizankers 1 relativ gering. Beirn Aufsitzen des Spreizkörpers 2 auf dem Grund des Bohrloches 9 ragen die Spreizsegmente 12 bereits weit in die Hinterschneidung 8 des Bohrloches 9 hinein. Die Verankerung des Spreizankers erfolgt durch Hammerschläge auf die Stirnseite des Spreizankers. Dabei gleiten die Spreizlamellen 12 über die Auflaufschräge 5 des Spreizkörpers 2 auf dessen Abstützfläche 15, bis die Stirnseite des Spreizankers 2 am Bohrlochgrund aufsitzt. Die Spreizsegmente 12 liegen an der Wandung der Hinterschneidung 8 vollständig an und werden gleichzeitig durch die Anlage des Abschnittes 7 auf der leicht verjüngten Abstützfläche 15 des Spreizkörpers abgestützt. Beim Auftreibvorgang dringt der Zapfen 4 weiter in die Innenbohrung 3 des Spreizankers ein. Zur Befestigung eines Gegenstandes 16 wird auf das Gewinde des verankerten Spreizankers 1 eine Mutter 17 aufgedreht.

Die Herstellung der beiden Abschnitte 7 und 13 der Innenbohrung 3 des Spreizankers 1 kann bei entsprechenden Größen durch Ausdrehen an einem Drehautomat erfolgen. Bei kleineren Durchmessergrößen des Spreizankers ist es jedoch vorteilhafter, zunächst eine zylindrische Innenbohrung von dem einführseitigen Stirnende ausgehend vorzusehen und die Einschlitzungen anzubringen. Danach wird der Spreizanker 1 etwa auf das Maß der Hinterschneidung 8 des Bohrloches 9 aufgeweitet. Mit einem Stufenbohrer wird dann der Spreizanker 1 von dem einführseitigen Stirnende her zur Bildung der Abschnitte 7,13 aufgebohrt. Durch Zusammendrücken der Spreizsegmente 12 auf das ursprüngliche Maß ergibt sich die gewünschte Kontur der Innenbohrung.

## Patentansprüche

1. Schlagspreizdübel für die Verankerung in konisch nach innen erweiterten Bohrlöchern, bestehend aus einem mehrfach geschlitzten und eine Innenbohrung aufweisenden Spreizanker mit einem Gewinde zum Befestigen von Gegenständen, und einem am Bohrlochgrund aufsitzenden, mit einer Auflaufschräge und einem in die Innenbohrung des Spreizankers eingreifenden Zapfen versehenen Spreizkörper, auf den der Spreizanker zur Verankerung auftreibbar ist, **dadurch gekennzeichnet**, daß die Innenbohrung (3) des Spreizankers (1) einen von ihrem vorderen Ende ausgehenden Trichter (6) aufweist, an den sich ein konisch erweiternder erster Abschnitt (7) und ein etwa gleichlanger, sich auf den Durchmesser der Innenbohrung (3) wieder verengender zweiter Abschnitt (13) anschließt, und daß der Spreizkörper (2) mit seiner Auflaufschräge (5) in dem Trichter (6) aufsitzt und über den im zylindrischen Teil der Innenbohrung (3) klemmend eingreifenden Zapfen (4) gehalten ist.

2. Schlagspreizdübel nach Anspruch 1, **dadurch gekennzeichnet**, daß die Abstützfläche (15) des Spreizkörpers (2) sich zum vorderen Ende hin verjüngt.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-2 622 261 (MODERNE MONTAGETECHNIK K. KUNKEL ) <br> * Seite 6, Zeile 5 - Zeile 30 * <br> --- | 1 | F16B13/08 |
| O,A | DE-A-3 117 581 (FISCHER) <br> * Abbildungen * <br><br> ----- | 1,2 | |

RECHERCHIERTE
SACHGEBIETE (Int. Cl.5 )

F16B

Der vorliegende Recherchenbericht wurde für alle Patentansprüche erstellt

| Recherchenort | Abschlußdatum der Recherche | Prüfer |
|---|---|---|
| DEN HAAG | 28 AUGUST 1992 | VAN DER WAL W. |